# EUROPÄISCHE PATENTSCHRIFT

(11) **EP 0 868 933 B1**
(45) Veröffentlichungstag und Bekanntmachung des Hinweises auf die Patenterteilung: **20.02.2002**
(21) Anmeldenummer: 98105781.3
(22) Anmeldetag: 30.03.1998
(51) Int. Cl.: B01D 39/08

(54) **Verwendung von Material als Filtermaterial enthaltend thermoplastische, elastomere Copolyetherester**
Use of material as filter material containing thermoplastic elastomeric copolyetheresters
Utilisation d'un matériau comme matériau de filtre contenant des copolyétheresters thermoplastiques élastomériques

(30) Priorität: 01.04.1997 DE 19713429
(43) Veröffentlichungstag der Anmeldung: 07.10.1998
(73) Patentinhaber: TEIJIN MONOFILAMENT GERMANY GMBH, 86399 Bobingen (DE)
(72) Erfinder: Striegl, Peter, 86399 Bobingen (DE); Sohn, Achim, 86399 Bobingen (DE)
(74) Vertreter: Luderschmidt, Schüler & Partner GbR

(56) Entgegenhaltungen:
- EP-A- 0 379 967
- PATENT ABSTRACTS OF JAPAN vol. 95, no. 007, 31.August 1995 & JP 07 096105 A (MITSUBISHI PLASTICS IND LTD), 11.April 1995,
- PATENT ABSTRACTS OF JAPAN vol. 95, no. 7, 31.August 1995 & JP 07 088306 A (MITSUBISHI PLASTIVS IND LTD), 4.April 1995,

## Beschreibung

Beschrieben wird die Verwendung von Filtermaterialien, die thermoplastische, elastomere Copolyether-ester entsprechend Anspruch 1 enthalten, und die Verwendung der Filtermaterialien in Filterpressen, vorzugsweise in Kammerfilterpressen. Ferner werden Kammerfilterpressen beschrieben, die diese Filtermaterialien enthalten.

Filterpressen, wie sie beispielsweise in Ullmanns Encyklopädie der technischen Chemie, 4. Auflage, Band 2, Vol 2, S. 178-181, beschrieben sind, werden besonders im großtechnischen Bereich vielfach zur Filtration eingesetzt. Je nach Anwendungszweck werden Filterpressen unterschiedlicher Bauart verwendet. Rahmenfilterpressen bestehen aus Filterplatten und Rahmen, die während der Filtration mechanisch oder hydraulisch zusammengepreßt werden, um die Filtrationsräume abzudichten. Kammerfilterpressen bestehen aus Platten, die mit einem Randwulst versehen sind, so daß bei dieser Pressenart auf einen Rahmen verzichtet werden kann. Aufgrund dieser Konstruktion besitzen Kammerfilterpressen den Vorzug, daß beim Öffnen der Presse zum Wechsel des Filtermaterials oder zur Beseitigung des Filterkuchens nur etwa die Hälfte der Filterelemente bewegt werden muß. Werden die Filterplatten in den vorstehend beschriebenen Filterpressen mit einer Membran aus Gummi überzogen, kann nach der Filtration durch Druck auf die Gummimembranen der Filterkuchen verdichtet werden, wodurch sich eine vereinfachte Ablösung des Filterkuchens ergibt.

An die Filtermaterialien in Filterpressen, insbesondere Kammerfilterpressen, werden hohe Anforderungen gestellt. Sie müssen ein gutes Rückhaltevermögen aufweisen, zu einem rückstandsfreien Filtrat und einem möglichst trockenen Filterkuchen führen. Die für die Herstellung der Filtermaterialien verwendbaren Garne bzw. Monofile müssen eine hohe Dimensionsstabilität, chemische Beständigkeit, Lebensdauer, Filtereffektivität und mechanische Festigkeit aufweisen. Bekannte Filtermaterialien für Filterpressen bestehen aus Polyestermonofilen. Derartige Monofile werden beispielsweise von der Hoechst Trevira GmbH & Co KG unter dem Handelsnamen ® Trevira Monofil vertrieben. Filtermaterialien aus diesen Monofilen zeichnen sich durch eine hohe Festigkeit bei einfacher Rezyklisierbarkeit aufgrund der Sortenreinheit, die diesen Monofilen zueigen ist, aus.

Filtermaterialien in Kammerfilterpressen sollen nicht nur eine hohe Festigkeit aufweisen, sonderen auch besonders langlebig sein, damit sie eine große Anzahl von Reinigungszyklen überstehen. Kommt es während eines Reinigungszyklus zu Überdehnung oder sogar Zerstörung einzelner Fäden im Filtermaterial, muß in der Regel das gesamte Filtertuch erneuert werden. In der EP-B-0 521 512 sind dahingehend verbesserte Filtertucheinheiten beschrieben. Die Filtertücher bestehen aus monofilen Geweben, auf die zur Verstärkung im Bereich des Randes ein Stütztuch aus einem Nadelfilz aufgebracht worden ist.

Die EP-A-0 379 967 beschreibt ein Monofil mit elastischen Eigenschaften, welches ein thermoplastisches Polyether-ester-Elastomer und ein Polyurethan enthält. Ferner wird die Herstellung von Industrietextilien durch Weben, Wirken oder Flechten vorgeschlagen. Unter den aufgezählten Verwendungen für das elastische Monofil finden sich auch Beschichtungsgewebe, Membranen, elastischen Bänder und Filtergewebe. Die Verwendung der Monofile in Geweben für Filterpressen ist in der Druckschrift nicht offenbart. Das thermoplastische Polyether-ester-Elastomer enthält als Elastomerkomponente 5 bis 50 Gew.-% eines Polyurethans. Die daraus hergestellten Monofile weisen eine Höchstzugkraftdehnung von 60 % auf.

Elastische Monofilamente aus Polyether-estern, die kein Polyurethan enthalten, sind bekannt und werden beispielsweise unter dem Handelsnamen ® ELAS-TER der Fa. Hoechst Celanese Corp., USA, vertrieben. Diese Monofilamente sind aus einem thermoplastischen Copolyether-ester mit dem Handelsnamen ® RITEFLEX (Hoechst Celanese Corp., USA) hergestellt und werden zur Herstellung von textilen Flächengebilden für Automobil-Sitzbezüge verwendet.

Es bestand somit immer noch ein Bedarf nach einfach aufgebauten und haltbaren Filtermaterialien für Filterpressen, vorzugsweise für Kammerfilterpressen, die neben einer verbesserten Haltbarkeit und damit hoher Lebensdauer gleichzeitig eine kostengünstige Recyclisierung ermöglichen.

Die vorliegende Erfindung betrifft somit die Verwendung eines Filtermaterials enthaltend synthetische Garne auf Basis eines thermoplastischen, elastomeren Copolyether-esters, welches dadurch gekennzeichnet ist, daß die Garne zu mehr als 70% Gew.-%, bezogen auf das Gesamtgewicht der Garne, aus einem thermoplastischen elastomeren Copolyether-ester bestehen, der zu mindestens 95 Gew.-% vorzugsweise 98 Gew.-% bezogen auf das Gesamtgewicht des thermoplastischen, elastomeren Copolyether-esters, die wiederkehrenden Struktureinheiten der Formeln I und II.

-O-OC-Ar²-CO-O-R⁴- (I),

und

-O-OC-Ar³-CO-O-R⁵- (II),

worin
- Ar² und Ar³: unabhängig voneinander zweiwertige aromatische Reste darstellen,
- R⁴: einen zweiwertigen aliphatischen oder cycloaliphatischen Rest darstellt, und
- R5: den zweiwertigen Rest eines Polyalkylenethers bedeutet, enthält.

Der Begriff "Garn" ist im Rahmen der vorliegenden Beschreibung unter seiner breitest vorstellbaren Bedeutung zu verstehen. Unter den Begriff fallen beispielsweise Monofilamente, Multifilamentgarne, Stapelfasergarne, Bikomponentengarne und Mischungen dieser Garne. Bevorzugt sind die Garne im erfindungsgemäßen Filtermaterial Monofilamentgarne, also sogenannte Monofile.

Unter einem "thermoplastischen, elastomeren Copolyether-ester" ist im Rahmen dieser Beschreibung ein Polymer zu verstehen, dessen Glasübergangstemperatur weniger als 23°C, vorzugsweise weniger als 0°C beträgt.

Vorzugsweise bedeuten Ar² und Ar³ unabhängig voneinander einen Phenylen- und/oder einen Naphthylenrest.

Besonders bevorzugt bedeuten Ar² und Ar³ jeweils 1,4-Phenylen.

R⁴ als zweiwertiger aliphatischer Rest bedeutet geradkettiges oder verzweigtes Alkylen oder Alkyliden; dabei handelt es sich üblicherweise um Reste mit zwei bis zwanzig Kohlenstoffatomen, bevorzugt zwei bis acht Kohlenstoffatomen und insbesondere zwei bis vier Kohlenstoffatomen.

Besonders bevorzugt ist R⁴ geradkettiges Alkylen mit zwei bis sechs Kohlenstoffatomen, insbesondere Ethylen.

R⁴ als zweiwertiger cycloaliphatischer Rest bedeutet üblicherweise einen Rest enthaltend fünf bis acht, vorzugsweise sechs Ringkohlenstoffatome; besonders bevorzugt ist dieser Carbocyclus Teil einer aliphatischen Kette. Ein Beispiel für einen besonders bevorzugten Vertreter dieses Typs ist der Rest des Cyclohexandimethanols.

Besonders bevorzugt ist R⁴ ein Rest der Formel -CₙH₂ₙ-, worin n eine ganze Zahl zwischen 2 und 6 ist oder ein von Cyclohexandimethanol abgeleiteter Rest.

R⁵ als zweiwertiger Rest eines Polyoxyalkylens bedeutet üblicherweise einen Polyetherrest, der wiederkehrende Oxyethylen-, Oxypropylen- oder insbesondere Oxybutyleneinheiten oder Mischungen dieser Einheiten aufweist.

Besonders bevorzugt stellt R⁵ einen Rest der Formel III dar

-[CₒH₂ₒ-O]_{z}-CₒH₂ₒ- (III),

worin o eine ganze Zahl von zwei bis vier bedeutet und z eine ganze Zahl von 1 bis 50 ist.

Ganz besonders bevorzugt bedeutet o vier und z ist eine ganze Zahl von 10 bis 18.

Besonders bevorzugt kommen thermoplastische und elastomere Copolyether-ester enthaltend die oben definierten wiederkehrenden Struktureinheiten der Formeln I und II zum Einsatz, worin Ar² und Ar³ 1,4-Phenylen bedeuten, R⁴ Ethylen ist, R⁵ eine Gruppe der oben definierten Formel III ist, o vier bedeutet, und worin der Anteil der wiederkehrenden Struktureinheiten der Formel III, bezogen auf den Anteil des Polyestermoleküls 5 bis 60 Gew.-% beträgt.

Garne, die aus derartigen thermoplastischen elastomeren Copolyether-estern bestehen, besitzen in Abhängigkeit vom Anteil der wiederkehrenden Struktureinheiten der Formel III unterschiedliche Schmelzpunkte; je höher der Anteil dieser Struktureinheiten ist, umso niedriger läßt sich der Schmelzpunkt einstellen. So weisen beispielsweise Garne aus einem thermoplastischen und elastomeren Copolyether-ester dieses Typs mit einem Gehalt von 13 Gew.-% Poly-oxybutylen einen Schmelzpunkt von etwa 220°C auf, während Garne aus einem thermoplastischen und elastomeren Copolyether-ester dieses Typs mit einem Gehalt von 53 Gew.-% Poly-oxybutylen einen Schmelzpunkt von etwa 160°C aufweisen.

Bedeuten in den oben definierten Strukturformeln irgendwelche Reste zweiwertige aliphatische Reste, so ist darunter verzweigtes und insbesondere geradkettiges Alkylen zu verstehen, beispielsweise Alkylen mit zwei bis zwanzig, vorzugsweise mit zwei bis acht Kohlenstoffatomen. Beispiele für derartige Reste sind Ethan-1,2-diyl, Propan-1,3-diyl, Butan-1,4-diyl, Pentan-1,5-diyl, Hexan-1,6-diyl oder Octan-1,8-diyl.

Bedeuten in den oben definierten Strukturformeln irgendwelche Reste zweiwertige cycloaliphatische Reste, so sind darunter Gruppen zu verstehen, die carbocyclische Reste mit fünf bis acht, vorzugsweise sechs Ringkohlenstoffatomen enthalten. Beispiele für derartige Reste sind Cyclohexan-1,4-diyl oder die Gruppe -CH₂-C₆H₁₀-CH₂-.

Bedeuten in den oben definierten Strukturformeln irgendwelche Reste zweiwertige aromatische Reste, so handelt es sich dabei um ein- oder mehrkernige aromatische Kohlenwasserstoffreste oder um heterocyclischaromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie -O-, -S-, -CO- oder -CO-NH-Gruppen miteinander verbunden sein.

Die Valenzbindungen der zweiwertigen aromatischen Reste können sich in para- oder in vergleichbarer koaxialer oder paralleler Position zueinander befinden, oder auch in meta- oder in vergleichbarer gewinkelter Position zueinander.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphen-4,4'-diyl Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Bedeuten irgendwelche Reste zweiwertige araliphatische Reste, so sind darunter Gruppen zu verstehen, die einen oder mehrere zweiwertige aromatische Reste enthalten, welche über eine oder beide Valenzen mit einem Alkylenrest kombiniert sind. Ein bevorzugtes Beispiel für einen derartigen Rest ist die Gruppe -C₆H₄-CH₂-.

Bei den wiederkehrenden Struktureinheiten der Formel I bzw. II handelt es sich um typische Hart- bzw. Weichsegmente. Thermoplastische Polyester dieses Typs sind bekannt und beispielsweise in Domininghaus: "Die Kunststoffe und ihre Eigenschaften", 3. Auflage, VDI Verlag GmbH, Düsseldorf 1988, S. 518 - 524 beschrieben.

Alle diese aliphatischen, cycloaliphatischen, aromatischen, araliphatischen oder Polyoxyalkylenreste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Für die Herstellung der erfindungsgemäß verwendeten Filtermaterialien sind solche Garne geeignet, die zu mindestens 70 Gew.-%, vorzugsweise zu mindestens 95 Gew.-%, insbesondere zu mehr als 98 %, aus dem vorstehend beschriebenen thermoplastischen elastomeren Copolyether-ester bestehen. Ganz besonders bevorzugt sind Garne, die ganz aus dem vorstehend beschriebenen thermoplastischen elastomeren Copolyether-ester bestehen.

Die Garne können neben dem thermoplastischen, elastomeren Copolyether-ester noch bis zu einer Menge von 30 Gew.-% von elastomeren oder nicht elastomeren spinnbaren Polymeren enthalten, die von den vorstehend beschriebenen thermoplastischen, elastomeren Copolyether-estern verschieden sind. Diese können beispielsweise elastomere oder nicht elastomere spinnbare Polymere auf Basis von Polyestern, Polyamiden oder Polyurethanen oder Polyolefinen sein.

Der thermoplastische elastomere Copolyether-ester kann, ohne daß die Gebrauchsfähigkeit des erfindungsgemäßen Filtermaterials herabgesetzt wird, noch andere Block-Copolymere enthalten, wie beispielsweise geringe Mengen von Copolymeren auf Basis von nichtelastomeren oder elastomeren Polyamiden oder Polyurethan. Im allgemeinen liegt der Anteil des Polyurethans unterhalb von 5 Gew.-%, vorzugsweise unterhalb 2 Gew.-%, bezogen auf die Gesamtmenge des thermoplastischen elastomeren Copolyether-esters. Besonders bevorzugt sind thermoplastische, elastomere Copolyether-ester, die ausschließlich aus Blockpolymeren auf Polyesterbasis bestehen.

Ein Beispiel für einen handelsüblichen thermoplastischen elastomeren Copolyether-ester, der sich für die Herstellung der Garne, vorzugsweise der Monofilamente, in den erfindungsgemäßen Filtermaterialien eignet, ist das unter der Bezeichnung ® RITEFLEX von der Fa. Hoechst Celanese Corp. erhältliche Produkt.

Die Garne können außer dem oben beschriebenen Copolyester noch geringe Mengen von Beimengungen und Additiven nicht polymerer Natur enthalten, wie z. B. Katalysatorrückstände, Modifizierungszusätze, Füllmittel, Mattierungsmittel, Pigmente, Farbstoffe, Stabilisatoren, wie UV-Absorber, Antioxydantien, Hydrolyse-, Licht- und Temperatur-Stabilisatoren und/oder Verarbeitungshilfsmittel, Weichmacher oder Gleitmittel. Vorzugsweise sind diese Additive in einer Konzentration von 0,01 - 5 Gew.-%, insbesondere 0,1 - 2 Gew.-% vorhanden. Bei den Katalysatorrückständen kann es sich beispielsweise um Antimontrioxid oder Tetraalkoxytitanate handeln. Als Verarbeitungshilfsmittel oder Gleitmittel können Siloxane, insbesondere polymere Dialkyl- oder Diarylsiloxane, Salze und Wachse sowie längerkettige organische Carbonsäuren, das sind solche mit mehr als 6 Kohlenstoffatomen, aliphatische, aromatische und/oder perfluorierte Ester und Ether in Mengen bis 1 Gew.-% eingesetzt werden. Die Garne können auch anorganische oder organische Pigmente oder Mattierungsmittel enthalten, wie z. B. organische Farbstoffpigmente oder Titandioxid, oder Ruß als Farb- oder Leitfähigkeitszusatz. Als Stabilisatoren werden beispielsweise Phosphorverbindungen, wie z. B. Phosphorsäureester, eingesetzt und darüber hinaus können, sofern erforderlich, auch Viskositätsmodifizierer und Stoffe zur Modifizierung des Kristallitschmelzpunkts bzw. der Glasübergangstemperatur oder solche, die die Kristallisationskinetik, bzw. den Kristallisationsgrad beeinflussen, eingesetzt werden. Als Viskositätsmodifzierer werden beispielsweise mehrwertige Carbonsäuren oder deren Ester, wie Trimesin- oder Trimellitsäure, oder mehrwertige Alkohole, wie z. B. Diethylenglykol, Triethylenglykol, Glycerin oder Pentaerytrit eingesetzt. Diese Verbindungen werden entweder den fertigen Polymeren in geringer Menge beigemischt oder, vorzugsweise, als Copolymerisationsbestandteile bei der Herstellung der Polymeren in gewünschter Menge hinzugegeben.

Die Garne, die im erfindungsgemäß verwendeten Filtermaterial eingesetzt werden können, weisen vorzugsweise eine Knotenfestigkeit von mind. 8 cN/tex, insbesondere 12 cN/tex, auf.

Vorzugsweise weisen die Garne eine Höchstzugkraftdehnung zwischen 65 und 110 % auf. Besonders bevorzugt sind Garne, die eine Höchstzugkraftdehnung von 70 bis 90 %, insbesondere 75 bis 85 %, aufweisen.

Die Festigkeit und die Höchstzugkraftdehnung wurde nach DIN ISO 2062 (1995) bestimmt.

Die Knotenfestigkeit (Knotenzugversuch) wurde nach DIN 53842 Teil 1 bestimmt, wobei abweichend von der Norm bei der Prüfung der Festigkeit immer Knoten mit Drehrichtung Z erzeugt wurden.

Die Flüssigkeitsdurchlässigkeit des erfindungsgemäß verwendeten Filtermaterials ist ein Maß für die Filterwirkung und muß für das gewünschte Einsatzgebiet, wie beispielsweise zum Einsatz in Kammerfilterpressen, auf das gewünschte Filtergut und die beabsichtigte Filterwirkung eingestellt werden. Die Flüssigkeitsdurchlässigkeit läßt sich mit Hilfe der Messung der Gasdurchlässigkeit auf definierte Weise angegeben. Es hat sich gezeigt, daß die Gasdurchlässigkeit des Filtergewebes beispielsweise für die Anwendung in Kammerfilterpressen im Bereich von 1 bis 300 l/dm²·min liegen muß.

Vorzugweise weist das erfindungsgemäß verwendete Filtermaterial eine Gasdurchlässigkeit im Bereich von 1 bis 100 l/dm²·min, besonders bevorzugt zwischen 5 bis 30 l/dm²·min. Insbesondere ist eine Gasdurchlässigkeit im Bereich von 10 bis 20 l/dm²·min bevorzugt.

Die Gasdurchlässigkeit wurde nach DIN 53887 bei einem Druckabfall von 200 Pa bestimmt.

Das erfindungsgemäß verwendete Filtermaterial weist eine überraschend hohe Langlebigkeit auf. Insbesondere dann, wenn das Filtermaterial in Kammerfilterpressen eingesetzt wird, muß es eine große Anzahl von Reinigungszyklen überstehen.
Während eines Reinigungszykluses wird das Filtergewebe um einen bestimmten Betrag gedehnt und wieder entspannt. Ein gutes Filtermaterial behält auch nach vielen Reinigungszyklen seine ursprüngliche Formstabilität bei. Wie sich gezeigt hat, stellt eine besonders praxisgerechte Meßmethode zur Charakterisierung dieser Eigenschaft die sogenannte Dimensionsdauerbeständigkeit dar. Die Dimensionsdauerbeständigkeit ist in Anlehnung an die in der DIN 53835 Teil 2 beschriebene Zugbeanspruchungskennzahl Cₙ definiert.

### Bestimmung der Dimensionsdauerstabilität:

Die Dimensionsdauerstabilität wurde bestimmt in weitgehender Übereinstimmung mit dem Hysteresezugversuchs nach DIN 53835 Teil 2.
Beim Hysteresezugversuch wird ein im Filtermaterial enthaltenes Garn in einer Zugprüfmaschine (Typ: UPM Zwick 1455) zwischen zwei Klemmen eingespannt. Durch Bewegung der Klemmen wird eine Zugbeanspruchung auf das Garn aufgebracht, wobei sich die Klemmen zwischen einer oberen und unteren Dehnungsgrenze bewegen. Dabei wird die Probe durch Klemmenbewegung zwischen den Dehnungsgrenzen ohne Pause an den Umkehrpunkten zügig mit einer vorgegebenen Klemmengeschwindigkeit beansprucht. Dabei werden die Zugkraft-Längenänderungskurven aufgezeichnet. Die Zugbeanspruchungskennzahl Cₙ in jedem Dehnungsspiel (n = Anzahl der Dehnungsspiele) ergibt sich aus dem Verhältnis der Zugkraft bei der halben Gesamtdehnung bei Belastung und der Zugkraft bei der Gesamtdehnung.
Aufgrund der speziellen Anforderungen, die ein Filtermaterial, beispielsweise bei der Verwendung in Kammerfilterpressen, erfüllen muß und der Beschaffenheit der in den erfindungsgemäßen Filtermaterialien enthaltenen Monofile mußte die DIN 53835 Teil 2, wiefolgt abgewandelt werden:
Anzahl der Dehnungsspiele: 100
Untere Dehnungsgrenze: 5%
Obere Dehnungsgrenze: 10%.
Vorspannkraft (Kraft, bei der die Probe in die Prüfmaschine eingespannt wird): 0,25 cN/tex
Freie Einspannlänge: 500 mm
Klemmengeschwindigkeit: 500 mm/min
Anzahl der Messungen für Mittelwert: 10

Die vorstehend beschriebene Bestimmung der Dimensionsdauerstabilität kann an trockenen Garnen in Normalklima oder, was den beim Einsatz des Filtermaterials vorliegenden Bedingungen noch näher kommt, auch an naßen Garnen durchgeführt werden. Zur Bestimmung der Dimensionsdauerstabilität mit naßen Garnen werden die Proben vor der Prüfung mindestens 24 Stunden in Leitungswasser bei Raumtemperatur gelagert. Die Meßproben werden einzeln entnommen und nach höchstens 60 s geprüft.

Die Garne im erfindungsgemäß verwendeten Filtermaterial weisen vorzugsweise eine Dimensionsdauerbeständigkeit C₁₀₀ vom mehr als 0,60 auf. Besonders bevorzugt liegt der Weit für die Dimensionsdauerbeständigkeit C₁₀₀ höher als 0,65, insbesondere in einem Bereich von 0,67 bis 0,8.

Vorzugsweise weisen die Garne im erfindungsgemäß verwendeten Filtermaterial einen Erweichungspunkt zwischen etwa 110 und 200° C auf. Der Schmelzpunkt der Garne liegt vorzugsweise zwischen etwa 150 und 235°C, insbesondere zwischen etwa 190 und 210°C.

Die Festigkeit der Garne beträgt vorzugsweise mindestens 12 cN/tex. Besonders bevorzugt sind Garne mit einer Festigkeit von mindestens 17 cN/tex, insbesondere mindestens 20 cN/tex.

Die Garne zur Herstellung des erfindungsgemäß verwendeten Filtermaterials weisen vorzugsweise einen Durchmesser zwischen 10 und 1500 µm auf. Besonders bevorzugt liegt der Durchmesser im Bereich von 100 und 800 µm. Der Titer liegt vorzugsweise in einem Bereich von etwa 1 bis 24400 dtex, insbesondere 300 bis 1100 dtex.

Um die Filterqualität zu verbessern, schwankt der Durchmesser der einsetzbaren Garne entlang ihrer Längsachse, bezogen auf den mittleren Durchmesser des Garns, vorzugsweise nur um ±5 %, insbesondere nur um ±3 %. Besonders bevorzugt sind Garne, die einen sehr gering schwankenden Durchmesser um ±1 % aufweisen.

Die vorstehend beschriebenen Garne weisen vorzugsweise einen Thermoschrumpf bei einer Temperatur von 180°C auf, der oberhalb des Thermoschrumpfs von Polyethylenterephthalat liegt. Im allgemeinen liegen die Werte für den Thermoschrumpf unter 50 %, insbesondere unter 30 %. Besonders bevorzugt sind Garne, die einen Thermoschrumpf im Bereich von 20 bis 25 % aufweisen.

Die erfindungsgemäß verwendeten Filtermaterialien bestehen im wesentlichen aus den vorstehend beschriebenen Garnen. Das heißt, daß die textilen Flächengebilde überwiegend, d.h. zu mindestens 65 Gew.-%, aus den oben beschriebenen Garnen bestehen. Besonders bevorzugt sind gemäß der Erfindung Filtermaterialien, die zu mindestens 80 Gew. %, insbesondere zu mindestens 95 Gew.%, aus den vorstehend beschriebenen Garnen bestehen.

Das textile Flächengebilde, welches im erfindungsgemäß verwendeten Filtermaterial zum Einsatz kommt, hat in der Regel einen ein- bis dreilagigen Aufbau und weist ein Flächengewicht von 100 bis 800 g/m², vorzugsweise 200 bis 600 g/m² auf.

Die vorstehend beschriebenen Garne können durch Weben, Stricken, Spiralisieren oder Wirken zu textilen Flächengebilden verarbeitet werden. Es ist aber auch möglich, daß zur Herstellung der erfindungsgemäßen Filtermaterialien neben Monofilamenten auch Multifilamentgarne oder Stapelfasergarne verwendet werden. Bevorzugt werden Monofilamente eingesetzt.

Werden die textilen Flächengebilde in Form von Spiraltüchern eingesetzt, können sowohl die Spiralen als auch die Steckdrähte aus elastischem Material bestehen. Es ist aber auch möglich, daß entweder nur die Spiralen oder nur die Steckdrähte aus elastischem Material bestehen.

Die zur Herstellung der erfindungsgemäß verwendeten Filtermaterialien eingesetzten Garne werden vorzugsweise auf den heute üblichen Webmaschinen mit den auch beim Verweben von Polyethylenterephthalat üblichen Maschinenparametern zu den textilen Flächengebilden verwebt. Besonders bevorzugt werden die Garne auf herkömmlichen Breitwebmaschinen mit den auch beim Verweben von Polyethylenterephthalat üblichen Maschinenparametern zu den textilen Flächengebilden verwebt.

Die Flüssigkeitsdurchlässigkeit des Filtermaterials läßt sich mit Hilfe an sich bekannter Maßnahmen, wie beispielsweise Wahl der Bindungsart, Titer, Flächengewicht, usw. in weiten Grenzen einstellen. Die Filterwirkung kann auf diese Weise an das jeweilige Einsatzgebiet des Filtermaterials angepaßt werden.

Im Gegensatz zu bekannten Filtermaterialien sind die erfindungsgemäß verwendeten Filtermaterialien besonders beständig gegen die Einwirkung von UV-Licht, Chlor, alkalischen Medien und der Einwirkung von heißem Wasser oder Dampf.

Weiterhin weisen diese Filtermaterialien eine besonders hohe Farbstoffaufnahme auf. Sie lassen sich daher besonders gut anfärben.

Die mechanischen Eigenschaften unter den aggressiven Bedingungen in einer Kammerpresse der erfindungsgemäß verwendeten Filtermaterialien sind besonders gut. So ist beispielsweise die Abriebsbeständigkeit des erfindungsgemäßen Filtermaterials höher als bei einem Filtermaterial, welches aus PET-Garnen hergestellt ist.

Besonders vorteilhaft ist das erfingungsgemäß verwendeten Filtermaterial, wenn neben besonders guten Festigkeitseigenschaften auf Sortenreinheit geachtet werden muß. Aufgrund der Sortenreinheit ergibt sich eine stark vereinfachte Recyclisierbarkeit.

Überraschenderweise läßt sich der sogenannte Filterkuchenabfall des erfindungsgemäß verwendeten Filtermaterials noch weiter verbessern, wenn vorzugsweise das vorstehend beschriebene textile Flächengebilde einseitig oder auch beidseitig thermisch gebügelt bzw. kalandriert wird. Das Filtermaterial weist dann eine erhöhte Oberflächenglätte auf.

Unter dem Begriff "Monofil" wird in der vorliegenden Erfindung ein einzelne Endlosfaser bestimmter Dicke verstanden. Der Querschnitt kann beliebig sein; beispielsweise rund, oval, bzw. ellipsenförmig, bi- oder multilobal, bändchenförmig oder auch n-eckig sein. Bevorzugt sind runde Monofile.

Beim Verfahren zur Herstellung der erfindungsgemäß verwendeten Filtermateriallen, wird aus einem oder mehreren Garnen durch Weben, Wirken, Stricken oder Spiralisieren ein textiles Flächengebilde hergestellt und das textile Flächengebilde auf an sich bekannte Weise zu einem Filtergewebe konfektioniert.

Vorzugsweise werden die Filtermaterialien aus Monofilamenten hergestellt.

Die Porengröße des textilen Flächengebildes läßt sich vorzugsweise durch Auswahl des Garntyps, des Garntiters, der Flächendichte, der Bindundgsart und/oder der anschließenden Konfektionierung so wählen, daß die Gasdurchlässigkeit als Maß für die Flüssigkeitsdurchlässigkeit bei einem Druckabfall von 200 Pa gemessen nach DIN 53887 im Bereich von 1 bis 300 l/dm²·min liegt.

Die vorliegende Erfindung betrifft somit die Verwendung der vorstehend beschriebenen Filtermaterialien beispielsweise für den Einsatz in Filtern im Bereich der Lebensmittelindustrie, chemischen Industrie, Farbenindustrie, Galvanik, Bergbau, Ölindustrie oder zur Filterung von Industrieabwässern und kommunalen Abwässern. Vorzugsweise werden die Filtermaterialien in Filterpressen, insbesondere in Kammerfilterpressen, eingesetzt.

Ein weiterer Gegenstand der Erfindung ist eine Filterpresse, vorzugsweise Kammerfilterpresse aus dem vorstehend beschriebenen Filtermaterial.

### Beispiele:

Untersucht wurden folgende Monofilamente hinsichtlich ihrer Eignung als Filtermaterial:
- ^{•}ELAS-TER der Fa. Hoechst Celanese Corp. (thermoplastischer Copolyether-ester, erfindungsgemäß),
- PA 6 (^{•}Perlon, Polyamid, Vergleich),
- ^{•}Trevira 936B (PBT-Monofil, Vergleich) und
- ^{•}Trevira 900S (PET-Monofil, Vergleich)

Die Ergebnisse der Messungen der technischen Daten dieser Monofilamente sind in Tabelle 1 dargestellt.

Aus den aufgelisteten Monofilamenten wurden durch Verweben auf einer Breitwebmaschine ein Gewebe hergestellt. Dabei wurden Monofile unterschiedlichen Durchmessers verarbeitet. In der Kette und im Schuß kamen Monofile mit 0,20 mm Durchmesser zum Einsatz. Das erhaltene Gewebe wird in der Regel auf einer entsprechend dimensionierten Thermofixiereinrichtung (Konfektionierungsschritt) nachbehandelt um die im Einzelfall erwünschten spezifischen Siebeigenschaften einzustellen und zu einem Filtermaterial für Kammerfilterpressen verarbeitet.

Wie sich zeigt, weist das Filtermaterial aus dem thermoplastischer Copolyether-ester (® ELAS-TER) im Vergleich zu Filtern aus Polyethylenterephthalat- (PET), Polybutylenterephthalat- (PBT) oder Polyamid 6- (PA 6) Monofilen eine besonders hohe Dimensionsdauerbeständigkeit C₁₀₀ von 0,69 und eine hervorragende Abriebfestigkeit auf. Für den Einsatz des Filtermaterials in Kammerfilterpressen ergibt sich daraus eine höhere Dimensionsstabilität sowohl in Kett-, als auch in Schußrichtung und eine erhöhte Lebensdauer auch bei hoher Beanspruchung.

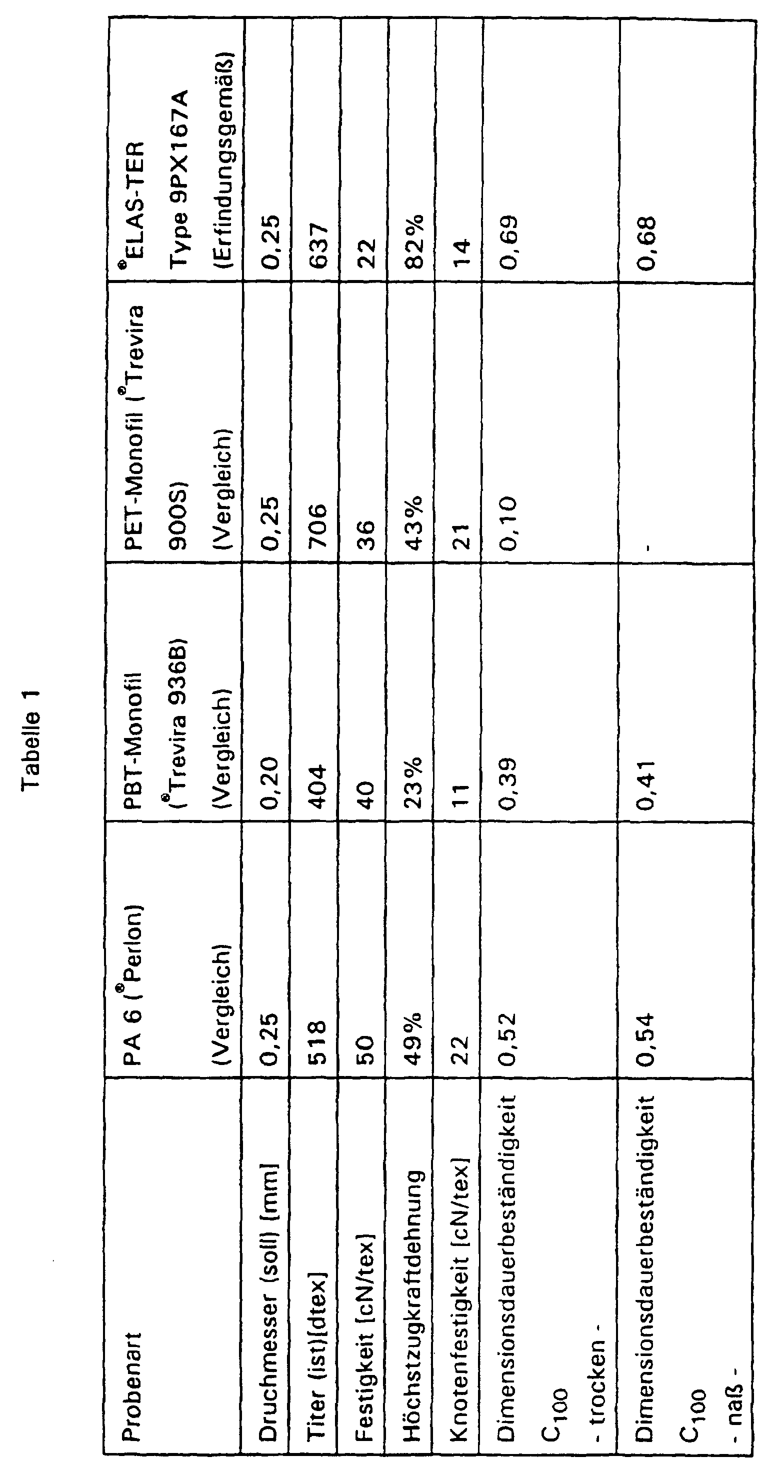

## Patentansprüche

1. Verwendung von Material als Filtermaterial enthaltend synthetische Garne auf Basis eines thermoplastischen, elastomeren Copolyether-esters, **dadurch gekennzeichnet, daß** die Garne zu mindestens 70 Gew.-%, bezogen auf das Gesamtgewicht des Garns, aus einem thermoplastischen, elastomeren Copolyether-ester bestehen, der zu mindestens 95 Gew.-%, bezogen auf das Gesamtgewicht des thermoplastischen, elastomeren Copolyether-esters, die wiederkehrenden Struktureinheiten der Formeln I und II
-O-OC-Ar²-CO-O-R⁴- (I),
und
-O-OC-Ar³-CO-O-R⁵- (II),
worin
Ar² und Ar³ unabhängig voneinander zweiwertige aromatische Reste darstellen,
R⁴ einen zweiwertigen aliphatischen oder cycloaliphatischen Rest darstellt, und
R⁵ den zweiwertigen Rest eines Polyalkylenethers bedeutet, enthält.

2. Verwendung von Material als Filtermaterial nach Anspruch 1, **dadurch gekennzeichnet, daß** die Gasdurchlässigkeit als Maß für die Flüssigkeitsdurchlässigkeit bei einem Druckabfall von 200 Pa gemessen nach DIN 53887 im Bereich von 1. bis 300 l/dm² min liegt.

3. Verwendung von Material als Filtermaterial nach einem der Ansprüche 1 ode 2, **dadurch gekennzeichnet, daß** die Garne zu mindestens 95 Gew.-%, bezogen auf das Gesamtgewicht der Garne, aus einem thermoplastischen, elastomeren Copolyester-ester nach Anspruch 1 bestehen.

4. Verwendung von Material als Filtermaterial nach einem der Ansprüche 1 bis 3, **dadurch gekennzeichnet, daß** die Dimensionsdauerbeständigkeit, ausgedrückt durch die Zugbeanspruchungskennzahl C₁₀₀ der Garne nach den 100. Dehnungsspiel, größer ist als 0,60, vorzugweise größer als 0,65, wobei C₁₀₀ bestimmt ist nach dem Hysteresezugversuch nach DIN 53835 Teil 2 mit einem Dehnungsspeil zwischen 5 und 10%, einer Vorspannkraft von 0,25 cN/tex, einer freien Einspannlänge von 500 mm und einer Klemmengeschwindigkeit von 500 mm/min.

5. Verwendung von Material als Filtermaterial nach einem der Amprüche 1 bis 4, **dadurch gekennzeichnet, daß** das Garn ein Monofilament ist.

6. Verwendung eines Filtermaterials, wie es in einem der Ansprüche 1 bis 5 beschrieben ist, in Filterpressen.

## Claims

1. Use of material as filter material, containing synthetic yarns based on a thermoplastic elastomeric copolyether ester, **characterised in that** at least 70% by weight of the yams, related to the total weight of the yam, consists of a thermoplastic elastomeric copolyether ester, at least 95% by weight of which, related to the total weight of the thermoplastic elastomeric copolyether ester, contains the recurring structural units of formulae I and II
-O-OC-Ar²-CO-O-R⁴- (I),
and
-O-OC-Ar³-CO-O-R⁵- (II),
where
Ar² and Ar³ independently represent bivalent aromatic residues,
R⁴ represents a bivalent aliphatic or cycloaliphatic residue, and
R⁵ represents a bivalent residue of a polyalkylene ether.

2. Use of material as filter material according to Claim 1, **characterised in that** the gas permeability, as a measure of liquid permeability, lies within the range of 1 to 300 l/dm² where there is a fall in pressure of 200 Pa measured according to DIN 53887.

3. Use of material as filter material according to one of Claims 1 or 2, **characterised in that** at least 95% by weight of the yams, related to the total weight of the yams, consists of a thermoplastic elastomeric copolyether ester according to Claim 1.

4. Use of material as filter material according to one of Claims 1 to 3, **characterised in that** the dimensional stability, expressed by the tension load coefficient C₁₀₀ of the yarns, is greater than 0.60, preferably greater than 0.65, after the 100^{th} expansion cycle, C₁₀₀ being determined according to the hysteresis tension test according to DIN 53835, Part 2, with an expansion cycle of between 5 and 10%, an initial damping force of 0.25 cN/tex, a free damping length of 500 mm and a damp speed of 500 mm/min.

5. Use of material as filter material according to one of Claims 1 to 4, **characterised in that** the yarn is a monofilament.

6. Use of filter material as described in Claims 1 to 5, in filter presses.

## Revendications

1. Utilisation de matériau comme matériau de filtre contenant des fils synthétiques à base d'un copolyéther-ester élastomère, thermoplastique, **caractérisé en ce que** les fils sont constitués à au moins 70 % en poids, par rapport au poids total du fil, d'un copolyéther-ester élastomère, thermoplastique, qui contient jusqu'à au moins 95 % en poids, par rapport au poids total du copolyéther-ester élastomère, thermoplastique, les motifs récurrents de structure des formules I et II
-O-OC-Ar²-CO-O-R⁴- (I),
et
-O-OC-Ar³-CO-O-R⁵- (II),
dans lesquelles
Ar² et Ar³ représentent indépendamment l'un de l'autre des groupes aromatiques divalents,
R⁴ représente un groupe aliphatiques ou cycloaliphatique divalent, et
R5 représente le reste divalent d'un polyalkylèneéther.

2. Utilisation de matériau comme matériau de filtre selon la revendication 1, **caractérisée en ce que** la perméabilité aux gaz comme mesure de la perméabilité aux liquides, mesurée pour une chute de pression de 200 Pa selon la norme DIN 53887 se situe dans la gamme comprise entre 1 et 300 1/dm².

3. Utilisation de matériau comme matériau de filtre selon l'une des revendications 1 ou 2, **caractérisée en ce que** les fils sont constitués jusqu'à au moins 95 % en poids, par rapport au poids total des fils, d'un copolyéther-ester élastomère, thermoplastique, selon la revendication 1.

4. Utilisation de matériau comme matériau de filtre selon l'une des revendications 1 à 3, **caractérisée en ce que** la tenue en durée de la dimension, exprimée par l'indice caractéristiques de mise sous charge en traction C₁₀₀ des fils selon le jeu d'allongement 100., est supérieur à 0, 60, de préférence supérieur à 0,65, C₁₀₀ étant déterminé selon l'essai de traction avec hystérésis selon la norme DIN 53835 partie 2 avec un allongement compris entre 5 et 10 %, une force de précontrainte de 0,25 cN/tex, une longueur libre entre mâchoires de 500 mm et une vitesse de mâchoires de 500 mm/min.

5. Utilisation de matériau comme matériau de filtre selon l'une des revendications 1 à 4, **caractérisée en ce que** le fil est un monofilament.

6. Utilisation d'un matériau de filtre, comme il est décrit dans l'une des revendications 1 à 5, dans des filtres presse.
